# EUROPEAN PATENT APPLICATION

(11) **EP 3 228 969 A1**
(43) Date of publication of application: **11.10.2017**
(21) Application number: 17165517.8
(22) Date of filing: 07.04.2017
(51) Int. Cl.: F25D 23/08, F25C 5/00

(54) **REFRIGERATOR**

(30) Priority: 08.04.2016 KR 20160043427
(71) Applicant: Dongbu Daewoo Electronics Corporation, Seoul 06194 (KR)
(72) Inventor: Yang, Sung Jin, 06194 Seoul (KR)
(74) Representative: Rau, Schneck & Hübner Patentanwälte Rechtsanwälte PartGmbB

(57) **Abstract**

A refrigerator (1) capable of effectively sealing a gap between an ice-maker (10) and a wall surface of the refrigerator (1) while preserving an internal capacity of the refrigerator (1). The ice-maker has a first external frame (110) coupled to an inner wall surface of the refrigerator main body (12) and comprises a first step portion (111) extending along a surface of the first external frame (110) facing the inner wall surface of the refrigerator main body (12). A second external frame (120) is coupled to the first external frame (110) and includes a second step portion (121) extending along the surface of the second external frame (120) facing a ceiling of the refrigerator main body (12). A sealing member (160) is coupled to the first and the second step portions which protrude from the first and the second external frames.

## Description

### CROSSREFERENCE TO RELATED APPLICATION

This application is based on priority from Korean Patent Application No. 10-2016-0043427, filed on April 08, 2016, the disclosure of which is incorporated herein in its entirety by reference for all purposes.

### TECHNICAL FIELD

The present disclosure relates to refrigerators, and more particularly, to ice-making mechanisms in refrigerators.

### BACKGROUND

A refrigerator is an electrical appliance that maintains a storage space at low temperature for storing food or other objects in a fresh or frozen state.

The internal storage of the refrigerator can be cooled to a preset low temperature through circulation of cold air that is continuously generated through refrigeration cycles using a refrigerant, a refrigeration cycle including compression, condensation, expansion and evaporation.

Top-mount-type refrigerators having a freezer positioned on a top of refrigeration chamber used to be the popular style. In recent years, however, bottom-freezer-style refrigerators have become more popular, in which a freezer is positioned under the refrigeration chamber. This style makes it easier for a user to access the refrigeration chamber but harder to access the freezer because the user typically has to bend down to open the freezer.

To solve such a problem, some bottom-freezer-type refrigerators have an ice dispenser installed in a refrigeration chamber door at the upper side of the refrigerator. An ice-maker is installed on the interior side of the refrigeration chamber.

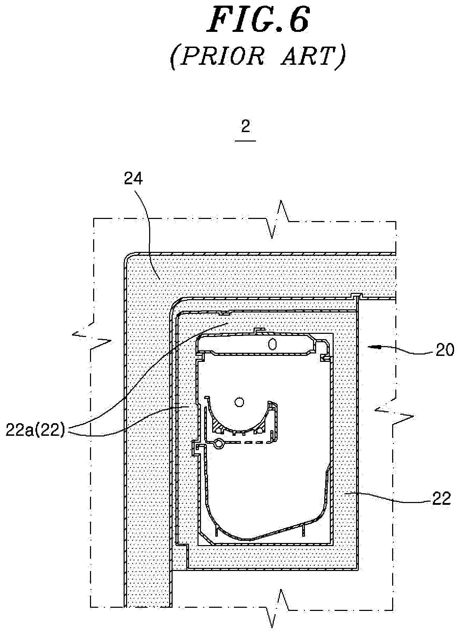

An ice-maker in related art includes a heat insulation structure for preventing a temperature increase caused by heat exchange of an internal cold air with an external air. Fig. 6 shows an ice-maker in the related art including a heat insulation structure.

As shown in Fig. 6, a heat insulation member 22a is disposed in the contact region between the ice-maker and an inner wall surface of a refrigerator 2. The heat insulation member 22a is adjacent to, and follows the same path as, a heat insulation structure 24 of the refrigerator 2.

However, in this configuration, a dead space is formed within the refrigerator 2, the dead space being occupied by the ice-maker and not used for storage. This causes the internal capacity of the refrigerator to become smaller.

In addition, it is difficult to seal a gap between the ice-maker 20 and the inner wall surface of the refrigerator 2. Poor sealing leads to dew formation which negatively affects refrigeration performance.

### SUMMARY

Embodiments of the present disclosure provide a refrigerator capable of effectively sealing a gap between an ice-maker and an inner wall surface of the refrigerator without reducing an internal capacity of the refrigerator.

The present disclosure provides a refrigerator comprising: a case mounted to a refrigerator main body; and an ice tray within the case and configured to store water for making ice, wherein the case includes: a first external frame coupled to an inner wall surface of the refrigerator main body and having a first step portion extending along an edge of one surface of the first external frame facing the inner wall surface of the refrigerator main body; a second external frame coupled to the first external frame to form an outer shell of the case and having a second step portion extending along an edge of one surface of the second external frame facing a ceiling surface of the refrigerator main body; and a sealing member coupled to the first step portion and the second step portion, the sealing member configured to continuously extend along the first step portion and the second step portion and to form a closed loop.

Further, the present disclosure also provides a refrigerator, wherein the first step portion and the second step portion protrude from the first external frame and the second external frame so as to shield the sealing member when the case is coupled to the refrigerator main body.

Further, the present disclosure also provides a refrigerator, wherein the first step portion makes surface-to-surface contact with the inner wall surface of the refrigerator main body, and the second step portion makes surface-to-surface contact with the ceiling surface of the refrigerator main body.

Further, the present disclosure also provides a refrigerator, wherein a heater is disposed inside of at least one of the first step portion and the second step portion.

Further, the present disclosure also provides a refrigerator, further including: an ice bucket disposed below the ice tray and configured to accommodate ice dropped from the ice tray; and a feeder assembly including an auger and an auger motor, the auger accommodated within the ice bucket and rotatable to feed the ice.

Further, the present disclosure also provides a refrigerator, wherein an internal frame is disposed between the first external frame and the second external frame, and an L-shaped heat insulation frame is provided between the internal frame and the second external frame.

Further, the present disclosure also provides a refrigerator, wherein an ejection part having a hole is provided in one end portion of the case. A cold air supply port configured to supply cold air is provided in the other end portion of the case. The hole allows ice produced in the ice tray to be discharged.

Further, the present disclosure provides a refrigerator, comprising: a case provided within a refrigerator main body; and an ice tray provided within the case and configured to store water for making ice, wherein the case includes: a first external frame coupled to an inner wall surface of the refrigerator main body and provided with a first step portion extending along an edge of one surface of the first external frame facing the inner wall surface of the refrigerator main body; a second external frame coupled to the first external frame to form an outer shell of the case and provided with a second step portion extending along an edge of one surface of the second external frame facing a ceiling surface of the refrigerator main body; and a sealing member coupled to the first step portion and the second step portion, and the first step portion and the second step portion protrude from the first external frame and the second external frame so as to shield the sealing member when the case is coupled to the refrigerator main body.

Further the present disclosure also provides a refrigerator, comprising: a case provided within a refrigerator main body; and an ice tray provided within the case and configured to store water for making ice, wherein the case includes: a first external frame coupled to an inner wall surface of the refrigerator main body and provided with a first step portion extending along an edge of one surface of the first external frame facing the inner wall surface of the refrigerator main body; a second external frame coupled to the first external frame to form an outer shell of the case and provided with a second step portion extending along an edge of one surface of the second external frame facing a ceiling surface of the refrigerator main body; and a sealing member coupled to the first step portion and the second step portion, wherein an internal frame is provided between the first external frame and the second external frame, and wherein an L-shaped heat insulation frame is provided between the internal frame and the second external frame.

In a refrigerator according to one embodiment of the present disclosure, a gap between an ice-maker and an inner wall surface of the refrigerator can be effectively sealed while preserving the internal capacity of the refrigerator.

### BRIEF DESCRIPTION OF THE DRAWINGS

Fig. 1 is a perspective view of the configuration of an exemplary refrigerator according to one embodiment of the present disclosure.
Fig. 2 is a side sectional view of the configuration of an exemplary ice-maker in the refrigerator illustrated in Fig. 1.
Fig. 3 is an exploded perspective view illustrating a case of the exemplary ice-maker illustrated in Figs. 1 and 2.
Fig. 4 is a view of a layout of an exemplary sealing member in the ice-maker illustrated in Fig. 2.

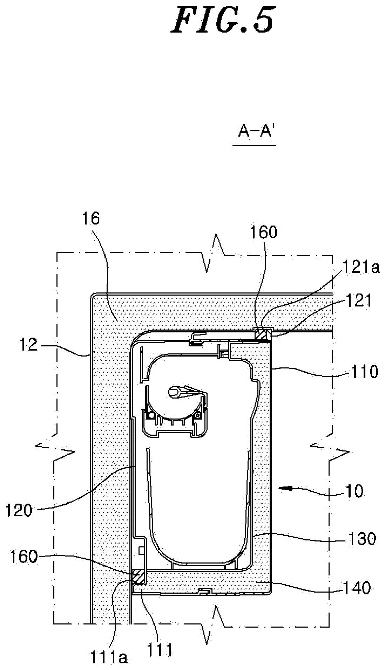

Fig. 5 is an enlarged sectional view illustrating a portion of the refrigerator in which the ice-maker illustrated in Fig. 2 is installed.
Fig. 6 is an enlarged sectional view illustrating a portion of a refrigerator in which an ice-maker of the related art is installed

### DETAILED DESCRIPTION

In the following detailed description, reference is made to the accompanying drawings, which form a part hereof. The illustrative embodiments described in the detailed description, drawings, and claims are not meant to be limiting. Other embodiments may be utilized, and other changes may be made, without departing from the spirit or scope of the subject matter presented here.

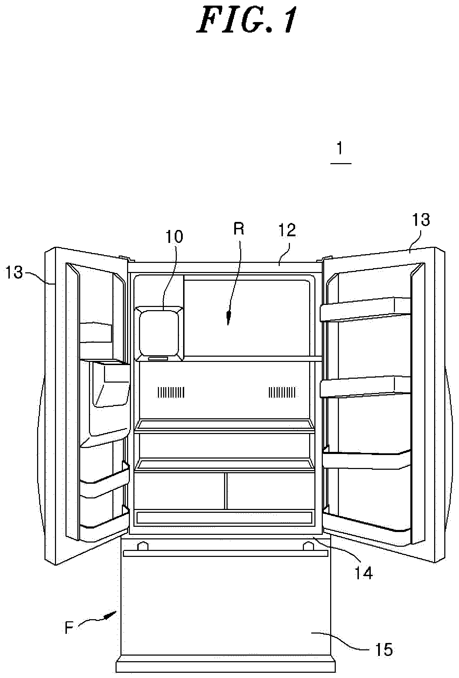

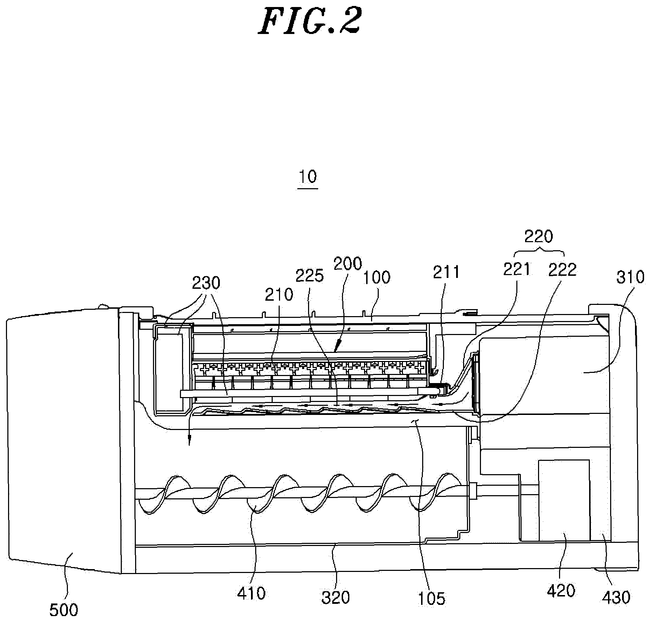

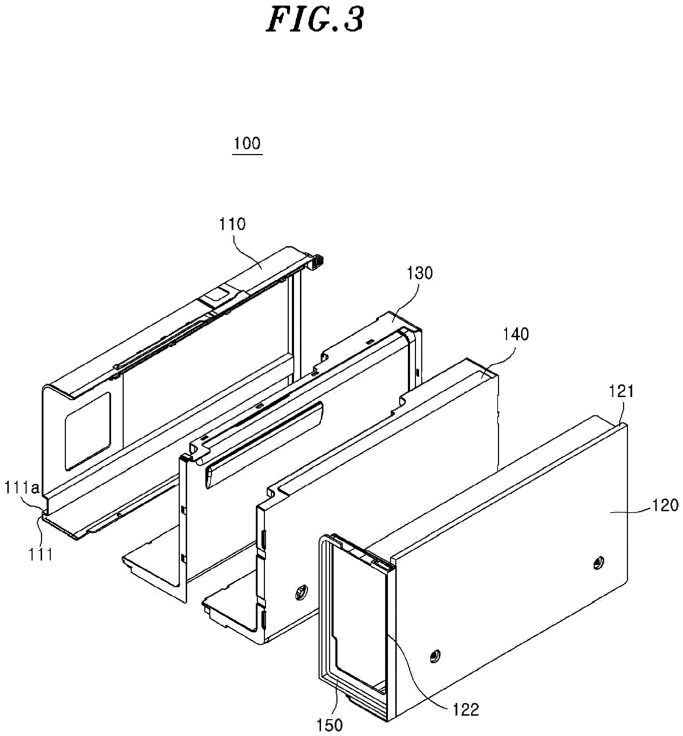

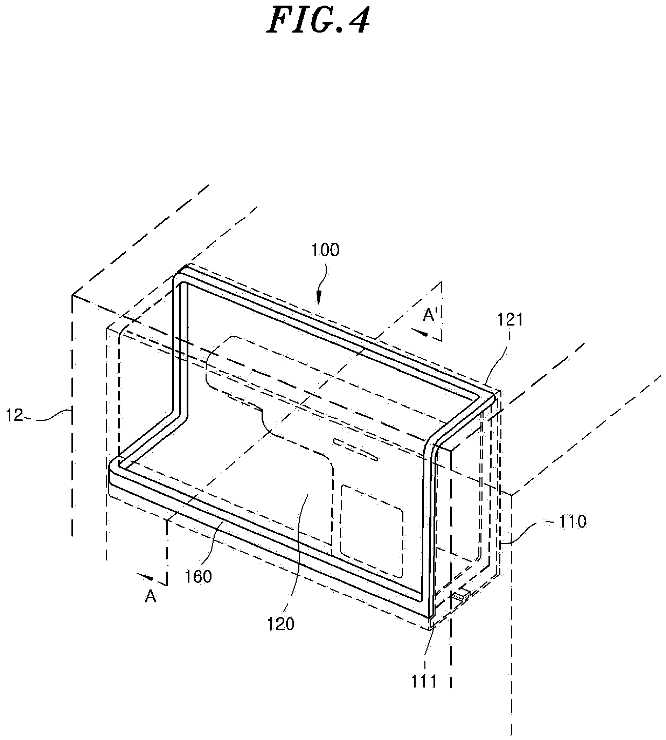

Fig. 1 is a perspective view of the configuration of an exemplary refrigerator according to one embodiment of the present disclosure. Fig. 2 is a side sectional view of the configuration of an exemplary ice-maker in the refrigerator illustrated in Fig. 1. Fig. 3 is an exploded perspective view illustrating a case of the exemplary ice-maker illustrated in Fig. 1. Fig. 4 is a view of a layout of an exemplary sealing member in the ice-maker illustrated in Fig. 2.

Referring to Figs. 1 to 4, the refrigerator 1 having an ice-maker 10 according to one embodiment of the present disclosure may include a refrigerator main body 12 serving as an outer shell (or exterior housing) of the refrigerator 1, a barrier 14 configured to divide the interior of the refrigerator main body 12 into an upper refrigeration chamber R and a lower freezer F, refrigeration chamber doors 13 mounted on a front edge of the refrigerator main body 12 and configured to cover the refrigeration chamber R, and a freezer door 15 configured to cover the freezer F.

In the illustrated embodiment of the present disclosure, the ice-maker 10 is on one side of an upper region of the refrigeration chamber R. However, this is merely exemplary. An ice-maker may be located in another portion of a refrigerator.

The ice-maker 10 may make close contact with an inner wall surface of the refrigerator main body 12. The ice-maker 10 may include a case 100, a cooling system (not shown), an ice-making assembly 200, an ice bucket 320, a feeder assembly 400 and an ejection part 500.

The case 100 is a housing and may be installed to make close contact with the inner wall surface of the refrigerator main body 12. For example, the ice-making assembly 200 is inside the case 100 and produces ice. Produced ice may be discharged through a hole of the ejection part 500. Cold air for producing ice may be supplied through a cold air supply port (not shown) in the other end portion of the case 100.

The case 100 may include, for example, a first external frame 110 coupled to the inner wall surface of the refrigerator main body 12, and a second external frame 120 coupled to the first external frame 110, where the second external frame 120 defines the overall external shape of the case 100.

The first external frame 110 may be fastened to the inner wall surface of the refrigerator main body 12. For example, the first external frame 110 may be fastened to the inner sidewall of the refrigerator main body 12, such as by screw fixing, bonding or other fastening methods well known in the art.

The first external frame 110 may have an upper end portion and a lower end portion. For example, the first external frame 110 may have an approximately C-like cross-sectional in general.

A first step portion 111 may be disposed in an edge of one surface of the first external frame 110 facing the inner wall surface of the refrigerator main body 12. For example, the first step portion 111 may protrude toward the inner surface of the refrigerator main body 12. A sealing member 160 may be bonded to an upper surface 111a of the first step portion 111. The sealing member 160 may prevent dew formation potentially caused by the temperature between the inside and the outside of the case.

A heater (not shown) may be disposed in the first step portion 111 and can evaporate dew formed in or around the first step portion 111. The heater may be injection-molded inside the first step portion 111 or may be bonded to the inside or the outside of the first step portion 111.

The second external frame 120 may be coupled to the first external frame 110 and form an outer shell of the case 100.

A fastening portion 122 may be disposed at the front end of the second external frame 120. The ejection part 500 may be coupled to the fastening portion 122. Furthermore, a fastening portion heater 150 may be disposed in the fastening portion 122 to evaporate dew formed in or around the fastening portion 122.

Additionally, a second step portion 121 may be disposed on one surface of the second external frame 120 facing an inner ceiling surface of the refrigerator main body 12 and extend along an edge of the second external frame 120. For example, the second step portion 121 may protrude along an edge of one surface of the second external frame 120 facing the inner ceiling surface of the refrigerator main body 12. A sealing member 160 may be disposed on inner surface 121a of the second step portion 121. As noted above, the sealing member 160 may prevent dew formation.

Descriptions will now be made on the configurations of the sealing member 160 in particular, the first step portion 111 and the second step portion 121. The sealing member 160 may be made of an elastic material such as rubber or the like and may continuously extend along the first step portion 111 and the second step portion 121. In other words, the sealing member 160 may continuously extend along the edge of the case 100, which makes contact with the refrigerator main body 12, and may form a closed loop.

In this case, the sealing member 160 may be coupled to the inside of the first step portion 111 and the second step portion 121. Thus, with the case 100 coupled to the refrigerator main body 12, the sealing member 160 may not be exposed to the outside.

In other words, the first step portion 111 and the second step portion 121 may protrude toward the inner wall of the refrigerator main body 12 and may shield the sealing member 160 with the case 100 coupled to the refrigerator main body 12.

Furthermore, during manufacturing, the case 100 may be coupled to the refrigerator main body 12 after the sealing member 160 is bonded to the first step portion 111 and the second step portion 121. Accordingly, installing the sealing member 160 becomes easier compared with the method of coating a sealing member 160 after the case 100 is coupled to the refrigerator main body 12 or the method of coupling the case 100 to the refrigerator main body 12 after a sealing member is bonded to the inner wall of the refrigerator main body 12.

The first step portion 111 and the second step portion 121 may protrude to make surface contact with the inner wall surface and the ceiling surface of the refrigerator main body 12. This can enhance the heat insulation properties provided by the case 100. Thus, dew formation caused by the temperature difference between the inside and the outside of the case 100 can be effectively prevented. In addition, one or more heaters may be installed inside the first step portion 111 and the second step portion 121 to facilitate dew evaporation in the first step portion 111 and the second step portion 121.

A heat insulation frame 140 may be installed inside the second external frame 120. The heat insulation frame 140 may be made of a material having superior heat insulation performance, such as a urethane foam or the like. The heat insulation frame 140 may be manufactured by foaming and solidifying a raw material within a mold for example.

The heat insulation frame 140 may be formed in an L-like cross-sectional shape and used to insulate the outer side of the ice-maker 10, which does not make contact with the refrigerator main body 12 when the ice-maker 10 is mounted to the refrigerator main body 12.

An internal frame 130 may be provided at the inner side of the heat insulation frame 140. The heat insulation frame 140 may be fixed by the internal frame 130. In other words, the heat insulation frame 140 may be disposed between the internal frame 130 and the second external frame 120. By fastening the internal frame 130 and the second external frame 120 together, the heat insulation frame 140 can be fixed between the internal frame 130 and the second external frame 120.

With such configuration of the L-shaped heat insulation frame, the internal capacity of the refrigerator can be increased. The first external frame 110 disposed at the side of the inner wall of the refrigerator main body 12 is not provided with a separate heat insulation frame because the refrigerator main body 12 is provided with a heat insulation material. Rather, the heat insulation frame 140 is only provided at the outer side of the ice-maker 10 which does not make contact with the refrigerator main body 12. A dead space as present in the refrigerator 1 can be reduced and therefore the internal capacity of the refrigerator 1 is advantageously enlarged.

A cooling system (not shown) is used to supply cold air to an ice tray 210. Any cold air generation device that is well known in the art may be used in the cooling system.

Specifically, the cooling system may include a compressor, a condenser, an expansion valve and an evaporator, and execute cooling cycles. The cooling system may generate cold air through heat exchange between a refrigerant with air. The cold air thus generated may be supplied to the ice tray 210 by a blow fan or the like via an injection duct 310 coupled to the cold air supply port of the case 100 and a cold air guide part 220.

The ice-making assembly 200 may include an ice tray 210 configured to store water, a cold air guide part 220 configured to guide a flow of cold air supplied from the cooling system so that the cold air moves along a lower surface of the ice tray 210, and a rotation part 230 configured to rotate the ice tray 210 so that ice formed in the ice tray 210 can drop out from the ice tray 210.

The ice tray 210 may include a plurality of ice-making spaces for storing water and may receive water from an external water source (not shown). After water is filled in the ice tray 210, cold air generated by the cooling system is supplied to the ice tray 210 to produce ice.

The ice tray 210 may be made of a metal having high heat conductivity to enhance ice production efficiency. For example, the ice tray 210 may be made of aluminum (Al). In addition, ribs (not shown) for increasing the contact area of the ice tray 210 with the cold air may be formed on the lower surface of the ice tray 210.

The cold air guide part 220 serves to guide the cold air supplied from the cooling system toward the lower side of the ice tray 210. The cold air guide part 220 may be coupled to an injection duct 310. Furthermore, the cold air guide part 220 may include first and second cold air guide members 221 and 222 coupled to at least one surface of the injection duct 310. The first cold air guide member 221 may extend from the upper surface of the injection duct 310. The second cold air guide member 222 may extend from the lower surface of the injection duct 310.

The first cold air guide member 221 may be coupled between the upper surface of the injection duct 310 and a bracket 211 to which the ice tray 210 is mounted. The second cold air guide member 222 may extend from the lower surface of the injection duct 310 and may be spaced apart from the lower surface of the ice tray 210. Thus, a cold air flow path 225, through which the cold air can move, may be formed between the lower surface of the ice tray 210 and the second cold air guide member 222.

The rotation part 230 may be used to transfer ice from the ice tray 210 to the ice bucket 320 disposed below the ice tray 210. For example, the upper surface of the ice tray 210 may be rotated toward the ice bucket 320 as a rotary shaft 231 rotates. At this time, if the ice tray 210 is rotated by a specified angle or more, the ice tray 210 is twisted by an interference member (not shown). Due to the twisting action of the ice tray 210, the ice contained in the ice tray 210 may fall into the ice bucket 320. Various other methods that are well known in the art may be employed as a method of transferring the ice from the ice tray 210.

The feeder assembly 400 serves to feed the ice toward the ejection part 500. The feeder assembly 400 may include an auger 410 and an auger motor 420. The auger 410 may be accommodated within the ice bucket 320. As the auger 410 rotates, ice stacked in the ice bucket 320 may be fed to the ejection part 500. The auger 410 may be rotated by the auger motor 420 provided in an auger housing 430.

Although exemplary embodiments of the present disclosure are described above with reference to the accompanying drawings, those skilled in the art will understand that the present disclosure may be implemented in various ways without changing the necessary features or the spirit of the present disclosure.

Therefore, it should be understood that the exemplary embodiments described above are not limiting, but only an example in all respects. The scope of the present disclosure is expressed by claims below, not the detailed description, and it should be construed that all changes and modifications achieved from the meanings and scope of claims and equivalent concepts are included in the scope of the present disclosure.

From the foregoing, it will be appreciated that various embodiments of the present disclosure have been described herein for purposes of illustration, and that various modifications may be made without departing from the scope and spirit of the present disclosure. The exemplary embodiments disclosed in the specification of the present disclosure do not limit the present disclosure. The scope of the present disclosure will be interpreted by the claims below, and it will be construed that all techniques within the scope equivalent thereto belong to the scope of the present disclosure.

## Claims

1. A refrigerator comprising:
an ice maker case coupled to a refrigerator main body; and
an ice tray disposed inside the ice maker case and configured to store water for making ice,
wherein the ice maker case comprises:
a first external frame coupled to an inner wall surface of the refrigerator main body and comprising a first step portion extending along an edge of one surface of the first external frame facing the inner wall surface of the refrigerator main body;
a second external frame coupled to the first external frame to form an outer shell of the ice maker case and comprising a second step portion extending along an edge of one surface of the second external frame facing a ceiling surface of the refrigerator main body; and
a sealing member coupled to the first step portion and the second step portion, the sealing member configured to continuously extend along the first step portion and the second step portion.

2. The refrigerator of Claim 1, wherein the sealing member forms a closed loop.

3. The refrigerator of Claim 1, wherein the first step portion and the second step portion protrude from the first external frame and the second external frame and are operable to shield the sealing member.

4. The refrigerator of Claim 1, wherein the first step portion makes surface contact with the inner wall surface of the refrigerator main body, and wherein the second step portion makes surface contact with the ceiling surface of the refrigerator main body.

5. The refrigerator of Claim 1 further comprising a heater disposed inside at least one of the first step portion and the second step portion.

6. The refrigerator of Claim 1 further comprising:
an ice bucket disposed below the ice tray and configured to receive ice supplied from the ice tray.

7. The refrigerator of Claim 6 further comprising:
a feeder assembly comprising an auger and an auger motor, wherein the auger is accommodated within the ice bucket and is operable to rotate to move ice.

8. The refrigerator of Claim 1 further comprising an internal frame that is disposed between the first external frame and the second external frame.

9. The refrigerator of Claim 8 further comprising an L-shaped heat insulation frame disposed between the internal frame and the second external frame.

10. The refrigerator of Claim 1 further comprising an ejection part having a hole configured to allow ice produced in the ice tray to be discharged, wherein the ejection part is disposed in one end portion of the ice maker case.

11. The refrigerator of Claim 10 further comprising a cold air supply port configured to supply cold air and disposed in another end portion of the ice maker case.

12. The refrigerator of Claim 1 further comprising a freezer and a refrigeration chamber, wherein the ice maker case is coupled to a door of the refrigeration chamber.
